Europäisches Patentamt

European Patent Office

Office européen des brevets

(11) Publication number: **0 082 212**
**B1**

(12)
# EUROPEAN PATENT SPECIFICATION

(45) Date of publication of patent specification: **26.02.86**

(21) Application number: **81110645.9**

(22) Date of filing: **21.12.81**

(51) Int. Cl.⁴: **B 29 C 63/36,** F 16 L 55/16,
F 16 L 58/10

(54) **Method for sealing pipes.**

(43) Date of publication of application:
**29.06.83 Bulletin 83/26**

(45) Publication of the grant of the patent:
**26.02.86 Bulletin 86/09**

(84) Designated Contracting States:
**AT BE CH DE FR GB IT LI LU NL SE**

(56) References cited:
**GB-A-1 352 829**
**GB-A-1 512 035**
**US-A-4 135 958**

(73) Proprietor: **INSITUFORM INTERNATIONAL INC**
**PO Box 463 Utility House Wesley Street**
**Hamilton (BM)**

(72) Inventor: **Chick, Douglas K.**
**Bays Hill Cottage Barnet Lane**
**Elsetree Herts (GB)**
Inventor: **Wood, Eric**
**52 Hatton Park Road**
**Wellingborough Northants (GB)**

(74) Representative: **Denmark, James**
**c/o Insituform Holdings Limited Bailey Walsh &**
**Co. 5 York Place**
**Leeds LS1 2SD Yorkshire (GB)**

Courier Press, Leamington Spa, England.

## Description

This invention relates to the lining of pipelines and passageways. The lining may be for the purpose of curing leaks, cracks and fissures in such pipelines and passageways, or it may be for the purpose of simply providing an inner lining.

In some service, underground pipelines, in particular in gas pipelines, there are pipe joints which are a source of trouble insofar as frequently at such joints there occur leaks and cracks such that it becomes difficult to prevent leakage of the gas from the pipeline. Such leakage can lead to dangerous situations, and in extreme cases explosion and bodily harm or even fatalities. It is therefore of considerable benefit if such pipelines can be repaired, rather than having to be replaced when the pipeline becomes unusable because of leaks, cracks or fissures.

Various methods have been proposed for curing leaks at pipelinee joints, but such methods have by and large involved exposing the pipe joint by excavation, and by wrapping the joint externally with a sealing bandage or medium. This process whilst satisfactory has the disadvantage of requiring location of the leak and excavation of the ground at such leak.

In one known arrangement, as disclosed in British Patent No. 1512035, a lining comprising a resin absorbent material tube inside a film membrane is everted into a pipeline or passageway and uncured resin is applied to the everting face of the laminate to impregnate the absorbent material, and the resin is cured to form a rigid lining on the pipeline/passageway surface. The present invention seeks to provide for the more effective impregnation of the resin absorbent material.

In accordance with the present invention there is provided a method of lining a pipeline or passageway wherein a flexible tubular laminate comprising a resin absorbent material inside a flexible membrane material, is everted into the pipeline or passageway so that the resin absorbent material is applied to the surface to be lined, an uncured synthetic resin composition is applied directly to the everting portion of the resin absorbent material whilst in the pipeline or passageway, and a vacuum is applied to the inside of the laminate whilst it is in the pipeline or passageway to extract air from the resin absorbent material in the region where it everts to draw resin into the resin absorbent material at the point of eversion so that the resin is absorbed by the said resin absorbent material and then the resin is cured to form a hard lining in which the absorbent material is embedded, and the everted laminate is held by fluid pressure against the pipeline or passageway until the composition cures.

The membrane and the resin composition may be such that the membrance bonds to the composition. The use of a vacuum inside the laminate has shown itself to be an extremely important aspect of this invention in that the removal of the air from the resin absorbent material at the everting face means that the resin absorbent material is in best condition to receive the resin presented thereto for the effective soaking or saturating of the resin absorbent material so that it will carry as much of the resin as possible without any air bubbles therein. Also, the resin absorbent material has only a short time to make contact with the resin and if it were full of air, this air would prevent effective penetration of the resin into the absorbent material. The resin can thus cure to a hard, homogeneous pipe wall having no voids and having the impact resisting resin absorbent material layer embedded therein.

The resin absorbent reinforcing material may be a tube of felt laminated with the flexible membrane so that the membrane and absorbent tube evert together, the absorbent tube initially being inside the membrane whereat the vacuum is applied, and after eversion, being located outside the membrane and being impregnated and soaked with the resin. It will be preferable to use a resin composition with a slow curing time to give the resin sufficient time thoroughly to soak through the absorbent material.

The method of the invention may be applied in relation to long or short pipeline lengths and also to pipeline lengths which are disposed vertically as well as horizontally. Thus, it can be applied for the lining of a vertically disposed pipeline length, such as a precast concrete pipe, the lining membrane and the absorbent material being everted upwards through the pipe, the composition being applied by forming a pool of the composition on top of the everting laminate.

This embodiment of the invention provides, in pipelines and passageways, a hard lining which is resistant to abrasion experienced for example when abrasive objects pass along the pipeline or passageway, and which also forms an effective seal against the escape of leakage of gas or other liquid medium from the pipeline or passageway. The lining also forms a barrier against the ingress of liquid or gas into the interior of the pipelines or passageways from the outside thereof.

According to a preferred feature of the invention, there is provided a proposal for controlling the curing of the resin composition.

It is known that the inclusion of a catalyst in a synthetic thermosetting resin composition can accelerate the curing of the resin considerably, but clearly the resin must not be allowed to set too quickly in the methods of the invention, as otherwise there would not be be sufficient time to position the liner against the pipeline or passageway to be lined. In accordance with the preferred feature of the present invention, a catalyst for accelerating the cure of the resin composition is embodied in the absorbent material so that accelerated cure of the resin composition only commences upon said composition being applied to the absorbent material.

The advantageous effects of this preferred method can readily be understood. The resin composition is presented to the absorbent material, is absorbed thereby and rapidly accelerates to curing by contacting the catalyst at the time of carrying out the installation process.

The thermosetting resin composition may be an expoxy resin and the absorbent material may be a polyester felt.

In order to ensure that the resin composition is applied evenly and effectively to the absorbent material, a further preferred feature of the present invention provides that a plug of the resin composition is pressed against the everting end of the everting member. By so pressing the plug there is applied a "back pressure" to the resin composition which ensures that the composition is forced as well as being pulled by the vacuum into the absorbent material effectively and evenly to impregnate the same, and also to ensure that the composition flows through the absorbent material if necessary into holes, recesses cracks and the like in the interior of the passageway or pipeline. The back pressure may be applied by a retaining shield which also serves to prevent the escape of resin composition into branch pipelines or passageways connecting with the pipeline or passageway being lined.

By this embodiment of the invention it is ensured that the composition fills cracks, recesses, hollows and the like in the pipeline but forms only a small thickness skin over other sections of the pipeline, ensuring that there is minimum usage of the resin composition.

The invention also provides a pipeline or passageway which is lined in accordance with the method of either embodiment of the present invention.

Embodiments of the present invention will now be described by way of example, with reference to the accompanying diagrammatic drawings, wherein:—

Fig. 1 is a sectional elevation of a pipeline section, including a pipe joint, to be lined;

Fig. 2 is a side view, partly in section of a tubular laminate used in the lining operation;

Figs. 3, 4 and 5 respectively are sectional elevations of the pipeline shown in Fig. 1, and these figures respectively show various stages in the method of the invention according to this embodiment;

Fig. 6 is a detail sectional elevation showing the laminate at the point of eversion and the action of sucking the resin into the centre of eversion;

Fig. 7 illustrates, in sectional elevation, a length of pipe being lined in accordance with another embodiment of the present invention;

Fig. 8 illustrates in sectional elevation a section of pipeline to be lined in accordance with another embodiment of the method of the invention;

Fig. 9 is a sectional elevation of the pipeline shown in Fig. 8 but showing the method of lining the pipeline in accordance with this embodiment of the invention;

Fig. 10 is again a sectional elevation of the pipeline shown in Fig. 8 but showing the process at a later stage;

Fig. 11 is a sectional elevation of a detail of Fig. 10.

Fig. 12 is a sectional view showing the lining of a passageway having a branch connection;

Fig. 13 is an enlarged sectional view of a detail of the method shown in Fig. 12, as the everting face passes the location wherein the branch connection meets the passageway being lined;

Fig. 14 is a sectional view of the passageway of Fig. 12 after the lining operation;

Fig. 15 is a sectional view showing the lining of a passageway according to a modified method of the invention; and

Fig. 16 is a sectional end view on the line A—A of Fig. 15.

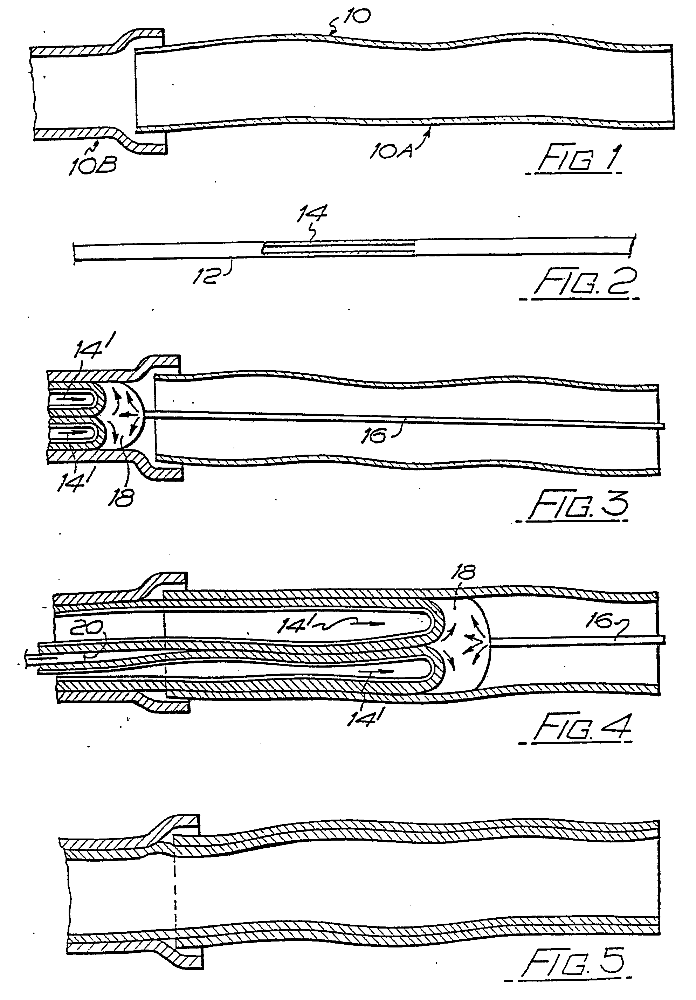

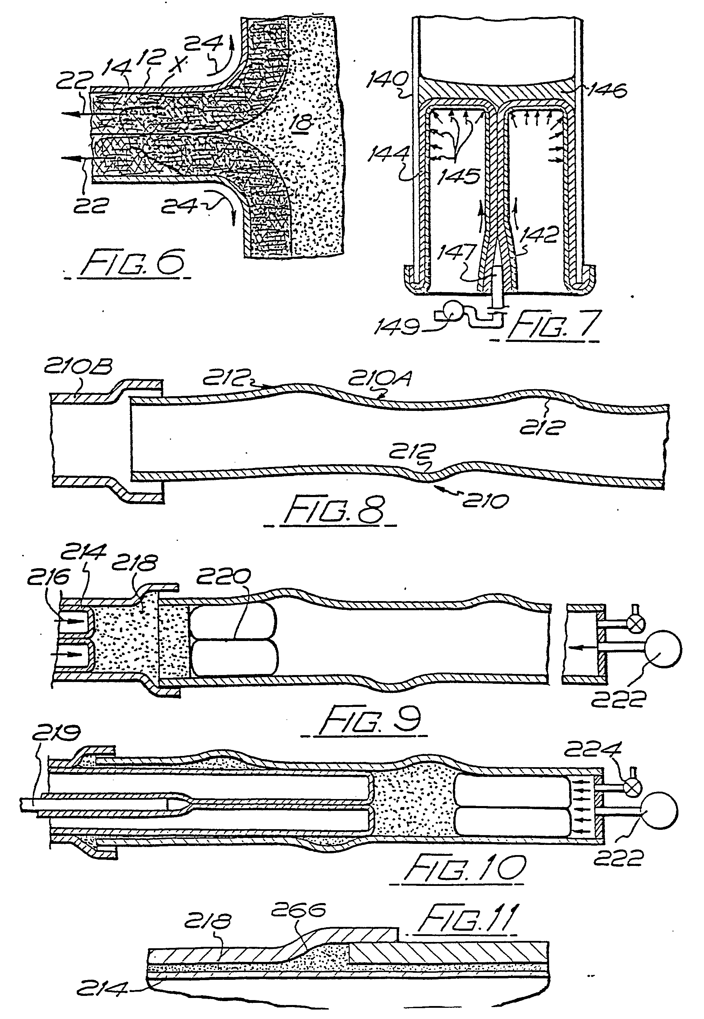

Referring to Fig. 1, there is shown a pipeline section 10 made up of portions 10A and 10B, the portion 10B being enlarged at the end shown, so as to overlap the adjacent end of the portion 10A, so as to define a pipe joint as shown.

This pipe section 10 is to be lined with a relatively thick layer of hard thermosetting resin, so as to seal the interior of the pipe section from leaks, and to increase its internal resistance to wear.

For this purpose, a laminate as shown in Fig. 2 is used. This is a tubular laminate, and comprises an outer skin 12 of a material, such as plastics material in the form of polyvinyl chloride or polyethylene, which is relatively impermeable to a gas such as air or a liquid such as water, by which the tube will be everted into and along the pipe section. Inside the tubular skin 12 is a tubular liner 14 of a resin absorbent material, such as felt or flexible porous plastics foam material, or even a mixture of these materials. Although it is not essential to all aspects of the invention, this absorbent tube may previously have been treated with a catalyst or accelerator, for example which "sets off" the particular resin which may be an epoxy or polyester resin.

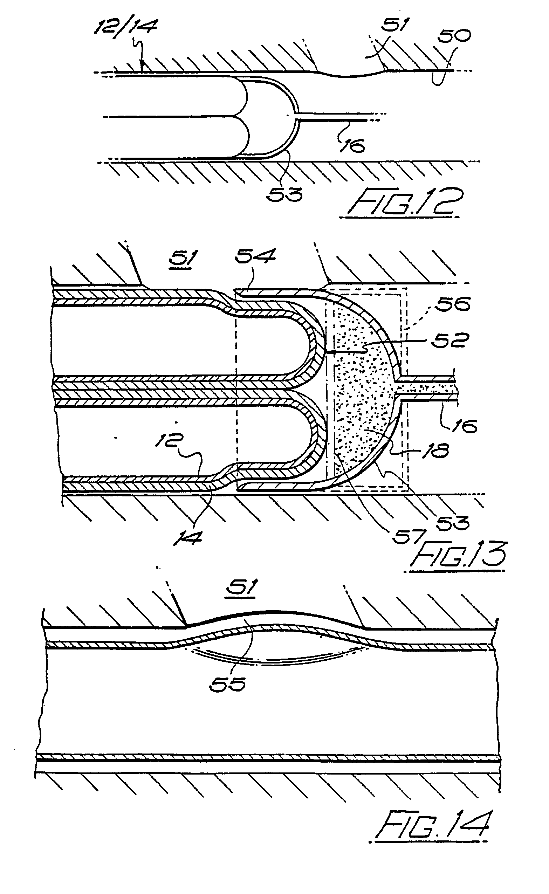

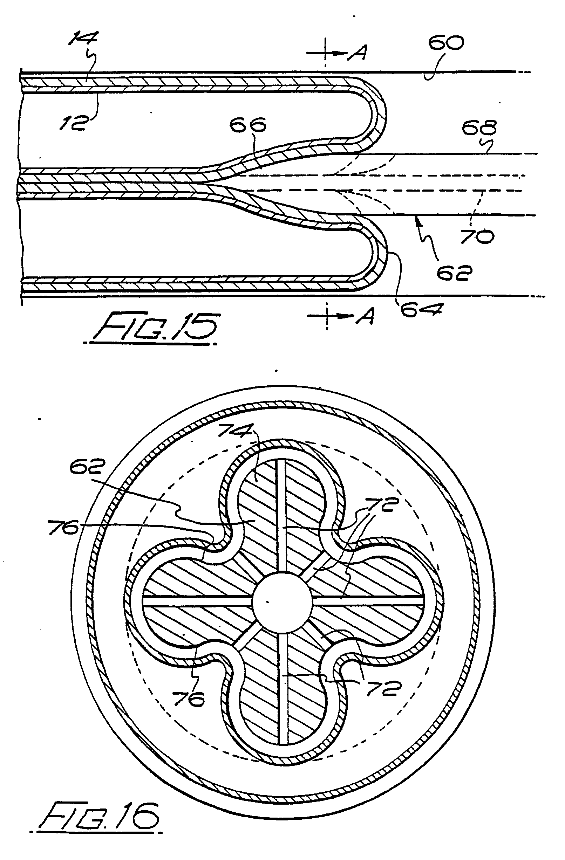

In order to evert the tubular laminate 12 into and along the pipe section 10, one end of the laminate is anchored firmly, and then a liquid or a gas under pressure is used to force or blow the laminate into and along the tube length 10 as shown in Figs. 3 and 4. Arrows 14' in these figures illustrate the application of the fluid pressure.

Into the other end of the pipeline section is introduced a supply pipe 16 from which is delivered a quantity 18 of the resin, so that this resin is presented to the everting face of the laminate, and comes into contact with the catalyst impregnated absorbent tube 14, immediately before such tube everts against the inner surface of the pipeline section 10. Fig. 4 shows the operation in a more advanced stage, and Fig. 5 shows the pipe section after the lining in which is embedded the absorbent tube 14. In some cases the membrane 12 may bond to the resin and therefore will remain in place to form a smooth inner surface. It may be necessary to trim the ends of the hardened liner of resin. Indeed, the skin 12 may be a coating applied to tube 14 so as to be integral therewith. It will be seen, as a comparison between Figs. 3 and 4, that the tube 16 progressively is moved towards the right as the operation proceeds. It will probably be noticed that the lining forms an effective seal even across the joint in the pipeline shown.

In order to achieve effective penetration of the resin composition 18 into the thickness of the resin absorbent layer 14, a vacuum is applied to the inside of the laminate before it everts in the passageway. This vacuum is applied through a vacuum pipe 20 shown in Fig. 4, and the vacuum may be applied by means of a suitable vacuum pump. The vacuum may be applied at any suitable location and Fig. 4 gives only one example of how it can be applied. The effect of applying a vacuum is to withdraw air from the inside of the laminate in the region prior to eversion. This means that in the very centre of the everting face, there will be a negative pressure and the resin will therefore be induced into the "eye" of the eversion. If reference is made to Fig. 6, the everting region is shown in detail. The arrows 22 indicate the negative pressure pull on the resin 18, and reference X indicates how the resin has in fact been induced into the centre of the everting portion, against the movement of the everting laminate in an outwardly folding direction as indicated by the arrows 24 in Fig. 6. The vacuum applied in this region removes air from all of the spaces in the resin absorbent material, and the vacuum thus created is filled by the resin 18 which penetrates deeply and thoroughly into the resin absorbent material. By the use of this vacuum in a short time the resin composition totally and completely impregnates the resin absorbent layer 14, without any voids, which results in an even homogeneous layer of resin, in which the absorbent and strengthening layer 14 is immersed, being applied to the wall of the passageway to be lined. This even and thorough impregnation is obtained in a very short space of time i.e. between the travel of each portion of the everting laminate from the eversion region to the inner surface of the pipeline which is being lined.

Referring now to Fig. 7, in this Fig. reference numeral 140 represents a concrete pipe to be lined. It will be seen that the pipe 140 stands upright and it is lined from the bottom end by everting into the pipe 140 a flexible lining tube membrane 142, which is laminated with a tube 144 of a resin absorbent material such as polyester felt material. The felt 144 lies inside tube 142 before it everts as shown in Fig. 7 after which the absorbent tube 144 lies outside tube 142. The eversion is by means of air under pressure acting on the lining tube 142 as indicated by the arrows 145 in Fig. 7 and the uncured synthetic resin is applied to the felt tube by being in the form of a pool 146 formed on the everting surface of the laminate 142, 144. The vacuum is applied to the inside of the laminate before it everts, for the purposes already explained herein, for example by vacuum pipe 147 and vacuum pump 149. The resin soaks thoroughly into the absorbent tube 144 and through it leaving no voids so as to make contact with the inner tube 142. The process is continued until the whole of the pipe 140 has been lined with the resin impregnated tube 144, appropriate resin being added to the pool 146 as desired. The resin is either allowed to cure naturally with the passage of time or is forced cured by the application of heat and then the lining is trimmed to the pipe length as desired. In this example of the method of the invention the inner membrane 142 either can remain with the cured resin or it may be such as to be stripable from the resin lining (containing the absorbent tube 144 embedded therein) after the resin has cured. This embodiment of the invention is extremely suitable for rendering pipe lengths suitable for carrying material for which they are otherwise unsuitable. For example, concrete pipe lengths can be made suitable for transporting corrosive materials which attack concrete but do not affect the resin lining.

In the embodiment of Fig. 7 the felt can be provided with a catalyst as described in relation to the embodiment of Figs. 1 to 6.

Referring now to Figs. 8 to 11 of the drawings, in Fig. 8 there is shown a pipeline 210 which has two sections 210A and 210B and the section 210B is enlarged at the end shown so as to overlap the adjacent end of the section 210A, and to form a pipe joint. The section 210A is shown as having bumps and recesses 212 which it can be assumed, have arisen as a result of use of the pipeline and the effluxion of time. Let it be assumed that the pipeline shown is a gas main, and that the joint between the sections 210A and 210B and the bumps or recesses 212 are sources of leakage, and it is desired to line the pipeline so as to seal these points of leakage.

In accordance with the method of this embodiment of the invention a tubular laminate as illustrated in Fig. 2 is used in the process. In the drawings, the laminate is indicated by reference numeral 214.

In order to line the pipeline the tubular laminate 214 is everted into the pipeline as shown in Fig. 9. To do this, one end of the tube is firmly fixed and sealed at one end of the pipeline, and then the tube 214 is everted by applying fluid under pressure such as air or gas, or steam or even a liquid, or a combination of such fluids, the pressure applied being indicated by the arrows 216 in Fig. 9. Also as described in relation to Figs. 1 to 6, a vacuum is applied to the inside of the tubular laminate so that the vacuum is present at the everting face. In this example, the tubular laminate 214 is everted against a plug 218 of a fluent lining composition such as epoxy resin, which is located in the pipeline and at the other side of the plug there is in this example a pipeline pig 220 which is a tube turned inside upon itself and having the ends sealed together. The pig 220 is inflated so as to bear against the inner wall of the pipeline as shown. The other side of the pig has fluid under pressure applied thereto, for example by pump 222, so as to force the pig against the plug 218 so that the plug 218 is trapped between the everting laminate 214 and the pig 220. This arrangement provides for the application of pressure to each side of the plug 218, with the effect that the plug material is forced against the pipeline walls as well as the everting laminate as the lining operation proceeds. As the laminate 214 is everted into and along the inside of the pipeline 210, the material of the plug 218 is wiped against the inner wall of the pipeline, and the plug 218 and pig 220 move along the pipeline. Fig. 10 shows the process at a later stage, when the pig 220 has moved nearly to the end of the section of pipeline which is shown in the drawings. This figure also shows the vacuum pipe 219. During the movement along the pipeline the air under pressure supplied from pump 222 is received through a one way valve 224.

At the completion of the lining operation, the inner surface of the pipeline 210 is provided with a skin of the lining material 218 as shown clearly in Fig. 11 moreover the lining material is forced into crevices or recesses, such as at 226 as shown in Fig. 11 in the region of the pipe joint, forming an effective seal at such recesses or crevices.

It is appreciated that it is not necessary to use the pipeline pig 220 shown in the drawings, and in some cases this may be omitted, the counter pressure on the plug being provided simply by a supply of air from the pump 222.

Furthermore, any suitable medium may be used for pressurising the pipeline on the downstream side, to maintain the application of pressure on each side of the plug, but it will be appreciated that in order to achieve movement of the everting laminate along the inside of the pipeline, the pressure in the everting laminate must be greater than that in the downstream section of the pipeline. It is to be noted also that the lining medium fills the bumps and hollows 212, as shown in Fig. 10 effectively sealing such locations against leakage.

In the arrangement shown in Figs. 12, 13 and 14, an underground passageway 50 with a branch connection pipe 51 is shown as being lined in accordance with the method described in relation to Figs. 1 to 7. This is to say, the laminate 12/14 is being everted along the passageway 50 to line same, and a vacuum is applied to the interior of the laminate so that the vacuum is present at the everting face 52 drawing the resin 18 into the resin absorbent material 14 of the laminate at the everting face 52.

Instead of the resin simply being sprayed from pipe 16 as in Fig. 14, the resin is retained in a retaining shield 53 in the form of a dished cup of which the outer edge 54 approximates to the diameter of the passageway 50 and embraces the everting end of the laminate in order to prevent, as shown in Fig. 13, resin from escaping into the branch connection 51. The shield may be of thin sheet material such as plastics or metal so that it will slip along the passageway as eversion proceeds, but it is shaped so as to contain the everting face 52 and with such everting face, form a closed chamber for the resin 18 which is charged into the chamber along pipe 16; pipe 16 can also form the means for pulling the shield 53 along the passageway 50. The shield will also be pushed along the passageway by the everting laminate end therefore the back pressure to be provided by the resin end shield need only be quite small, but care should be taken to ensure that the everting laminate does not trap or jam the edge 54 of the shield 53 which could terminate the eversion process.

Fig. 14 shows how the installed laminate lies over the branch connection opening 51 and bulges thereinto. Subsequently, it is necessary to re-establish the connection between the branch connection 51 and the passageway 50 by remaining portion 55 of the lining hence the reason why it is desireable that the resin should be prevented from flowing into the branch connection 51 during eversion.

Instead of using a dished cup 53 a cylindrical box as indicated by dotted lines 56, may be used. In another arrangement, a flat plate as indicated by dotted lines 57 may be applied to the everting face to retain the resin 18 in a chamber extending from the eye of the everting face to where the everting face lies tangent to said plate. The plate will of course be provided with a hole through which the resin is supplied to said chamber.

Referring to the arrangement of Figs. 15 and 16, again the laminate 12/14 is being everted along a passageway 60, to line same, in the method as described in relation to Figs. 1 to 6, with vacuum applied to the interior of the laminate. However, a former 62 is engaged in the everting face 64 of the laminate as shown. The former 62 serves two purposes namely to shape the laminate around the former as shown in Fig. 16, and also to distribute resin in the everting face of the laminate. The former has a tapered end section 66 which penetrates the everting face 64, the section 66 leading to a cylindrical section 68. The resin is fed along a bore 70 in the former, and is distributed to the laminate along a plurality of passages 72 as shown in Fig. 16.

The section 66 which engages in the everting face 64 has a lobed cross-section defining crests 74 and valleys 76 and the laminate is sucked onto the former to follow these crests and valleys by virtue of the existence of the vacuum in the interior of the laminate. By this, the laminate is kept smooth and free of creases as it everts, thereby enhancing the impregnation process. The former 62 moves along the passageway with the everting face 64, and the laminate slips over the former end section 66 as it everts. This modification may be used in any of the embodiments described in relation to Figs. 1 to 14.

It is to be appreciated that the method of the invention can be applied to any pipeline or passageway, whether underground or not, and can be utilised in connection with the embodiments of the invention described in relation to Figs. 1 to 7.

**Claims**

1. A method of lining a pipeline or passageway wherein a flexible tubular laminate (12, 14) comprising a resin absorbent material (14) inside a flexible membrane material (12), is everted into the pipeline (10, 140, 210) or passageway (50, 60) so that the resin absorbent material is applied to the surface to be lined, an uncured synthetic resin composition (18) is applied directly to the everting portion of the resin absorbent material whilst in the pipeline or passageway, and the resin is cured to form a hard lining in which the absorbent material is embedded, and the everted laminate is held by fluid pressure against the pipeline or passageway until the composition cures, characterised in that a vacuum is applied to the inside of the laminate (12, 14) whilst it is in the pipeline or passageway to extract air from the resin absorbent material (14) in the region where it everts to draw resin (18) into the resin absorbent material (14) at the point of eversion so that the resin (18) is absorbed by the said resin absorbent material (14).

2. A method according to Claim 1, characterised in that the laminate (12, 14) is everted upwards into the pipeline (140) or passageway.

3. A method according to Claim 1, characterised in that the resin (18) is applied to the absorbent material (14) in the form of a plug (218) of an uncured synthetic resin composition in the pipeline or passageway to the other side of which is applied a back pressure.

4. A method according to Claim 3, characterised in that the back pressure is applied by means of a resin retaining member (53) which partially embraces the everting portion of the laminate (12, 14).

5. A method according to Claim 4, characterised in that the retaining member (53) is a dished member of which the outer diameter is approximately the same as the diameter of the surface of the pipeline or passageway (50) being lined to prevent resin (18) from escaping up branch connection pipelines (51) or passageways.

6. A method according to Claim 1, characterised in that a shaped former (62) penetrates the laminate (12, 14) where it everts in the pipeline or passageway (60) said former (62) serving as a resin distributor to enhance application of the resin absorbent material.

7. A method according to Claim 6, characterised in that the former (62) has a tapering end (66) which engages in the everting portion (64) of the laminate (12, 14) and is of lobed cross-section and the laminate (12, 14) lies on the lobed cross-section with minimum creasing.

**Revendications**

1. Procédé de revêtement d'une canalisation ou d'un passage, dans lequel un lamifié tubulaire flexible (12, 14) comprenant un matériau absorbant une résine (14) à l'intérieur d'un matériau en membrane flexible (12), est retourné dans la canalisation (10, 140, 210) ou le passage (50, 60) de sorte que le matériau absorbant la résine est appliqué à la surface à revêtir, une composition de résine synthétique non durcie (18) est appliquée directement à la partie se retournant du matériau absorbant la résine tandis qu'elle est dans la canalisation ou le passage, et la résine est durcie pour former un revêtement dur dans lequel le matériau absorbant est noyé, et le lamifié éversé est maintenu par pression de fluide contre la canalisation ou le passage jusqu'à ce que la composition durcisse, caractérisé en ce qu'un vide est appliqué à l'intérieur du lamifié (12, 14) tandis qu'il est dans la canalisation ou le passage pour extraire l'air du matériau absorbant la résine (14) dans la région où il se retourne pour attirer la résine (18) dans le matériau absorbant la résine (14) au point d'éversion de sorte que la résine (18) est absorbée par ledit matériau absorbant la résine (14).

2. Procédé selon la revendication 1, caractérisé en ce que le lamifié (12, 14) est retourné vers le haut dans la canalisation (140) ou le passage.

3. Procédé selon la revendication 1, caractérisé en ce que la résine (18) est appliquée au matériau absorbant (14) sous forme d'un tampon (218) d'une composition de résine synthétique non durcie dans la canalisation ou le passage, sur l'autre côté duquel est appliquée une contre-pression.

4. Procédé selon la revendication 3, caractérisé en ce que la contre-pression est appliquée au moyen d'un organe de retenue de la résine (53) qui recouvre partiellement la partie se retournant du lamifié (12, 14).

5. Procédé selon la revendication 4, caractérisé en ce que l'organe de retenue (53) est un organe convexe dont le diamètre externe est approximativement le même que le diamètre de la surface de la canalisation ou du passage (50) qui est revêtu pour empêcher la résine (18) de s'échapper dans des dérivations (51) de la canalisation ou du passage.

6. Procédé selon la revendication 1, caractérisé en ce qu'un gabarit (62) profilé pénètre le lamifié (12, 14) à l'endroit où il se retourne dans la canalisation ou le passage (60), ledit gabarit (62) servant de distributeur de résine pour augmenter l'application du matériau absorbant la résine.

7. Procédé selon la revendication 6, caractérisé en ce que le gabarit (62) présente une extrémité (66) effilée qui s'engage dans la partie (64) se retournant du lamifié (12, 14) et qui possède une section transversale lobée et le lamifié (12, 14) s'étend sur la section transversale lobée avec un minimum de plis.

**Patentansprüche**

1. Verfahren zum Auskleiden einer Rohrleitung oder eines Durchlasses, wobei ein flexibles rohrförmiges Laminat (12, 14) aus einem harz-absorbierenden Material (14) innerhalb eines flexiblen Membranmaterials (12) in die Rohrleitung (10, 140, 210) oder den Durchlaß (50, 60) so hineingestülpt wird, das das harz-absorbierende Material in die auszukleidende Fläche angelegt wird, eine ungehärtete synthetische Harzmasse (18) direkt auf den stülpenden Abschnitt des harz-absorbierenden Materiales angelegt wird, während dieses sich in der Rohrleitung oder dem Durchlaß befindet, und das Harz ausgehärtet wird, um eine harte Auskleidung zu bilden, in die das absorbierende Material eingebettet ist, und das gestülpte Laminat durch Fluiddruck gegen die Rohrleitung oder den Durchlaß gehalten wird, bis die Masse aushärtet, dadurch gekennzeichnet, daß ein Unterdruck auf die Innenseite des Laminates (12, 14) angewendet wird, während es sich in der Rohrleitung oder dem Durchlaß befindet, um Luft von dem harz-absorbierenden Material (14) in seinem Stülpbereich abzuziehen und Harz (18) in das harz-absorbierende Material (14) an der Stülpstelle einzuziehen, so daß das Harz (18) durch das harz-absorbierende Material (14) absorbiert wird.

2. Verfahren nach Anspruch 1, dadurch gekennzeichnet, daß das Laminat (12, 14) in die Rohrleitung (140) oder den Durchlaß hinein nach oben gestülpt wird.

3. Verfahren nach Anspruch 1, dadurch gekennzeichnet, daß das Harz (18) an das absorbierende Material (14) in Form eines Stopfens (218) aus einer ungehärteten synthetischen Harzmasse in der Rohrleitung oder dem Durchlaß angelegt wird, an dessen anderer Seite ein Gegendruck angelegt ist.

4. Verfahren nach Anspruch 3, dadurch gekennzeichnet, daß der Gegendruck mittels eines Harz-Halteteils (53) angelegt ist, das teilweise den stülpenden Abschnitt des Laminates (12, 14) umfaßt.

5. Verfahren nach Anspruch 4, dadurch gekennzeichnet, daß das Halteteil (53) ein schüsselförmiges Teil ist, dessen Außendurchmesser annähernd gleich dem Durchmesser der auszukleidenden Fläche der Rohrleitung oder des Durchlasses (50) ist, um zu verhindern, daß Harz (18) bei Abzweig-Rohrleitungsverbindungen (51) oder -Durchlässen entweicht.

6. Verfahren nach Anspruch 1, dadurch gekennzeichnet, daß ein geformtes Formglied (62) das Laminat (12, 14) an der Stelle durchdringt, an der das Laminat in der Rohrleitung oder dem Durchlaß (60) umstülpt, wobei das Formteil (62) als Verteiler für das Harz dient, um das Anlegen des harz-absorbierenden Materials zu verbessern.

7. Verfahren nach Anspruch 6, dadurch gekennzeichnet, daß das Formteil (62) ein sich verjüngendes Ende (66) besitzt, das an dem umstülpenden Abschnitt (64) des Laminates (12, 14) anliegt, daß es einen gelappten Querschnitt besitzt und daß das Laminat (12, 14) mit minimaler Faltenbildung an dem gelappten Querschnitt anliegt.

_FIG 1_

_FIG.2_

_FIG.3_

_FIG.4_

_FIG.5_

_FIG. 6_

_FIG. 7_

_FIG. 8_

_FIG. 9_

_FIG. 10_

_FIG. 11_

2

_FIG.12_

_FIG.13_

_FIG.14_

_FIG.15_

_FIG.16_